# EUROPEAN PATENT APPLICATION

(11) **EP 3 406 922 A1**
(43) Date of publication of application: **28.11.2018**
(21) Application number: 17741381.2
(22) Date of filing: 17.01.2017
(51) Int. Cl.: F16C 11/06

(54) **BALL JOINT, SWAGING METHOD, AND SWAGE BLOCK**

(30) Priority: 20.01.2016 JP 2016008559
(71) Applicant: NHK Spring Co., Ltd., Yokohama-shi, Kanagawa 236-0004 (JP)
(72) Inventor: KURODA, Shigeru, Yokohama-shi Kanagawa 236-0004 (JP)
(74) Representative: Dehns
(86) International application number: PCT/JP2017/001410
(87) International publication number: WO 2017/126503

(57) **Abstract**

This ball joint (1b) is provided with: a ball stud (10) having a stud part (10s) one end of which is coupled to a stabilizer device (2) or a suspension device (3), and the other end of which is integrally joined to a ball part (10b); a housing (11) made of a metal material having a space, one end of which is open and which swingably and turnably supports the ball part (10b) of the ball stud (10); and a ball seat (12) interposed between the housing (11) and the ball part (10b). A swaged section (11k3) for swaging the ball seat (12) is a lump having a mountain-shaped cross-section into which an opening rim part thinner than a trunk section (11j) of the housing (11) is deformed by a compressive load.

## Description

### TECHNICAL FIELD

The present invention relates to a ball joint which constitutes, for example, a stabilizer link that couples a suspension device of a vehicle to a stabilizer device thereof, and relates to a swaging method and a swage block.

### BACKGROUND ART

A suspension device of a vehicle reduces an impact transmitted from a road surface to a vehicle body, and a stabilizer device thereof enhances roll stiffness (stiffness to torsion) of the vehicle body. The suspension device is coupled to the stabilizer device through a stabilizer link. The stabilizer link includes a rod-like support bar and boll joints provided on two ends of the rod-like support bar. Each ball joint is configured such that a spherical ball part of a ball stud is turnably housed in a cup-shaped housing through the intermediary of a ball seat that is made of a resin. The ball seat that acts as a lubricant is interposed between the housing and the ball part, swaged by an opening rim part of an opening of the housing, and pressed and fixed by the swaging (by a swaged section).

A swaged section of a ball joint described in Patent Literature 1 exemplifies the swaged section of this type. The swaged section is provided at an opening of a housing and is constructed by plastically deforming a thin plate-shaped projection edge (an opening rim part) formed integrally with an end wall of the opening. As for a swaging method using the swaged section, the projection edge is first brought into gradient deformation (bent) at an angle of about 45° with a load P1 in a radial direction of the opening. Then, the swaging is performed by further bending the projection edge while applying a load P2 in an axial direction. With the swaging by pressing the ball seat as described above, the ball stud having been inserted into the housing through the intermediary of the ball seat is made capable of appropriately adjusting swinging torque and turning torque at the time of swinging and turning the ball stud.

### CITATION LIST

### Patent Literature

Patent Literature 1: WO 2006/019145

### SUMMARY OF INVENTION

### Technical Problem

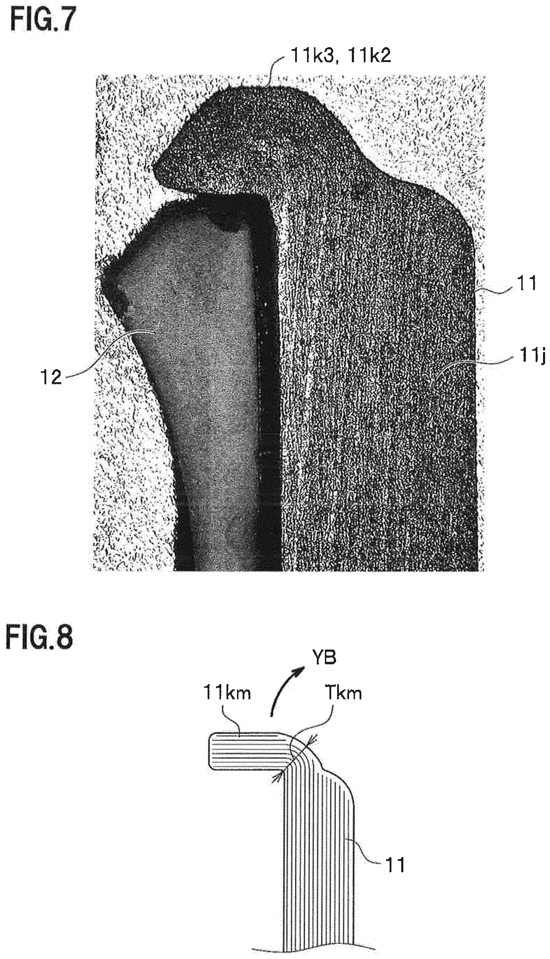

In the meantime, as shown in a partial cross-sectional view of a housing 11 in FIG. 8, when the ball seat is swaged with the housing as described above, the plate-shaped opening rim part of the housing 11 made of a metal is bent inward as indicated with reference sign 11km, thereby swaging the ball seat (not shown). However, bending the opening rim part as mentioned above causes metal tension in which an outer peripheral side of the bent part is stretched toward a front end, whereby a thickness Tkm of the bent part becomes less than the original thickness. Thus, a significant residual stress remains at this part. For this reason, the bent swaged section 11km develops spring-back immediately after the swaging in such a way as to restitute a little in a direction toward a location before the bending as indicated with an arrow YB.

This leads to deterioration in positional accuracy of the swaged section, so that the swaged section may interfere with the swinging ball stud. In addition, the pressure of the swaged section against the ball seat may be weakened due to a failure to form the swaged section and the ball seat as per the design. These consequently cause problems including deterioration in durability of the ball seat, an increasing variation in swinging and sliding torque of the ball stud, and so forth.

The present invention has been made in view of the aforementioned background, and an object thereof is to provide a ball joint, a swaging method, and a swage block, which enable swaging in such a way as to properly press a ball seat while suppressing spring-back of a swaged section.

### Solution to Problem

To solve the above problems, a ball joint of the present invention provides a ball joint which includes: a ball stud formed by integrally joining a spherical body part to an end part of a coupling part; a housing made of a metal material, provided with a space having an opening on one side, and configured to swingably and turnably support the spherical body part of the ball stud; and a supporting member interposed between the housing the spherical body part, the supporting member being swaged by a swaged section at an opening rim of the housing. Here, the swaged section is a lump having a mountain-shaped cross-section formed by at least part of an opening rim part formed thinner than a trunk section of the housing.

A swaging method of the present invention provides a swaging method applicable to a ball joint including a ball stud formed by integrally joining a spherical body part to an end part of a coupling part, a housing made of a metal material, provided with a space having an opening on one side, and configured to swingably and turnably support the spherical body part of the ball stud, and a supporting member interposed between the housing the spherical body part. The swaging method is designed to swage the supporting member by a swaged section at an opening rim of the housing. The swaging method includes: bending an opening rim part of the housing; applying a pressure from a front end side of bending toward the bent part; and deforming at least part of the opening rim part into a lump serving as the swaged section.

Another swaging method of the present invention provides a swaging method applicable to a ball joint including a ball stud formed by integrally joining a spherical body part to an end part of a coupling part, a housing made of a metal material, provided with a space having an opening on one side, and configured to swingably and turnably support the spherical body part of the ball stud, and a supporting member interposed between the housing the spherical body part. The swaging method is designed to swage the supporting member by a swaged section at an opening rim of the housing. The swaging method executes: a first step of bringing a bending surface of a first block, which is provided with the bending surface having a circular surface inclined by a predetermined first angle, into contact with the opening rim of the housing, and bending an opening rim part of the housing at a predetermined angle by pressing the bending surface in a direction toward the supporting member; a second step of bringing a bending surface of a second block, which is provided with the bending surface having a circular surface inclined by a smaller angle than the first angle, into contact with a front end of the opening rim part bent in the first step, and bending the opening rim part more than the first step by pressing the bending surface in the direction toward the supporting member; and a third step of inserting the front end of the opening rim part bent in the second step into a recess of a third block, which is provided with the recess formed in one surface in a circularly recessed manner, and deforming the opening rim part bent in the second step into a lump serving as the swaged section by pressing the recess in the direction toward the supporting member, and swaging the supporting member with the lump.

A swage block of the present invention provides a swage block applicable to a ball joint including a ball stud formed by integrally joining a spherical body part to an end part of a coupling part, a housing made of a metal material, provided with a space having an opening on one side, and configured to swingably and turnably support the spherical body part of the ball stud, and a supporting member interposed between the housing the spherical body part. The swage block is designed to allow a swaged section at an opening rim of the housing to swage the supporting member. The swage block includes: an enclosure including a through-hole being provided in a mold form in a vertically penetrating manner, and being capable of enclosing the ball joint such that the coupling part is enclosed in the through-hole while the housing projects outward; and a recess formed by being circularly recessed in an end surface of an opening of the mold form where the housing projects. Here, the opening rim of the housing is inserted into the recess, the recess is pressed in a direction toward the supporting member to deform an opening rim part of the housing into a lump, and the supporting member is swaged with the lump.

### Advantageous Effects of Invention

According to the present invention, it is possible to provide a ball joint, a swaging method, and a swage block, which enable swaging in such a way as to properly press a ball seat while suppressing spring-back of a swaged section.

### BRIEF DESCRIPTION OF DRAWINGS

FIG.1 is a perspective view showing a state in which a stabilizer link including a ball joint of according to an embodiment of the present invention couples a damper to a stabilizer.
FIG. 2 is an exploded perspective view showing a disassembled state of components in a chain-line frame A in FIG. 1.
FIG. 3A is a vertical cross-sectional view of the ball joint.
FIG. 3B is an enlarged view of inside of a circular frame F1 of the ball joint.
FIG. 3C is a perspective view of a portion of an opening rim part of a housing of the ball joint.
FIG. 4A is a cross-sectional view of the opening rim part of the housing before deformation.
FIG. 4B is a cross-sectional view of the opening rim part of the housing after first deformation.
FIG. 4C is a cross-sectional view of the opening rim part of the housing after second deformation.
FIG. 4D is a cross-sectional view of the opening rim part of the housing after third deformation.
FIG. 4E is a cross-sectional view of the opening rim part of the housing after fourth deformation.
FIG. 4F is a cross-sectional view of the opening rim part of the housing after fifth deformation.
FIG. 4G is a cross-sectional view of the opening rim part of the housing after sixth deformation.
FIG. 5A is a configuration diagram of a first swage block.
FIG. 5B is a configuration diagram of a second swage block.
FIG. 5C is a configuration diagram of a third swage block.
FIG. 5D is a configuration diagram of inside of a circular frame F2 in FIG. 5C.
FIG. 6A is a diagram showing a first procedure of a first step when swaging the opening rim part of the housing with the swage block.
FIG. 6B is a diagram showing a second procedure of the first step when swaging the opening rim part of the housing with the swage block.
FIG. 6C is a diagram showing a third procedure of the first step when swaging the opening rim part of the housing with the swage block.
FIG. 6D is a diagram showing a first procedure of a second step when swaging the opening rim part of the housing with the swage block.
FIG. 6E is a diagram showing a second procedure of the second step when swaging the opening rim part of the housing with the swage block.
FIG. 6F is a diagram showing a third procedure of the second step when swaging the opening rim part of the housing with the swage block.
FIG. 6G is a diagram showing a first procedure of a third step when swaging the opening rim part of the housing with the swage block.
FIG. 6H is a diagram showing a second procedure of the third step when swaging the opening rim part of the housing with the swage block.
FIG. 6I is a diagram showing a third procedure of the third step when swaging the opening rim part of the housing with the swage block.
FIG. 6J is an enlarged diagram of inside of a circular frame F5 shown in FIG. 6I.
FIG. 7 is a vertical cross-sectional view of a swaged section formed by deformation attributed to compressive loading according to the embodiment.
FIG. 8 is a vertical cross-sectional view of a swaged section formed by conventional bending.

### DESCRIPTION OF EMBODIMENTS

Embodiments of the present invention will be hereinafter described with reference to the drawings.

### <Embodiment>

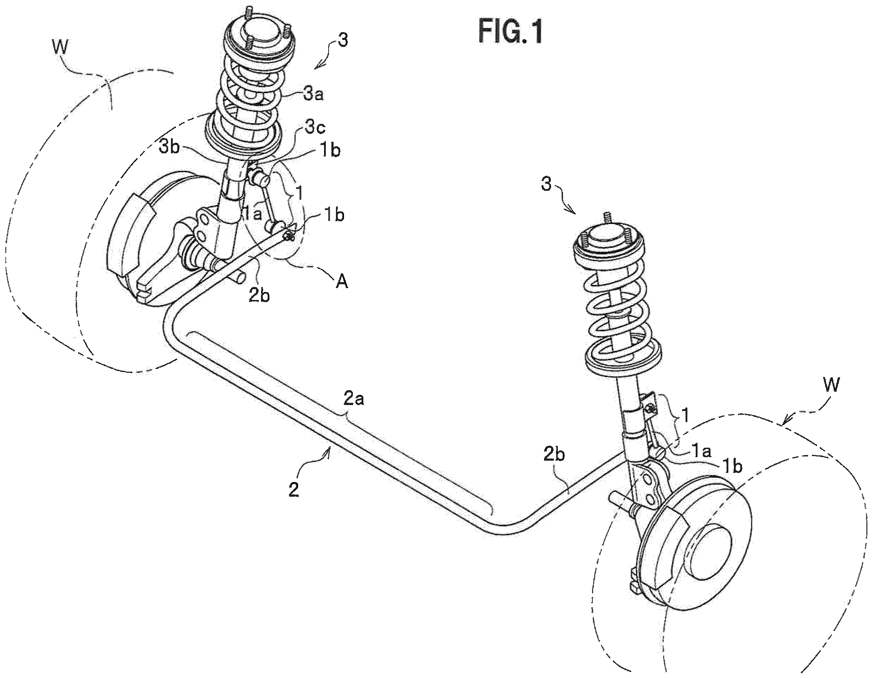

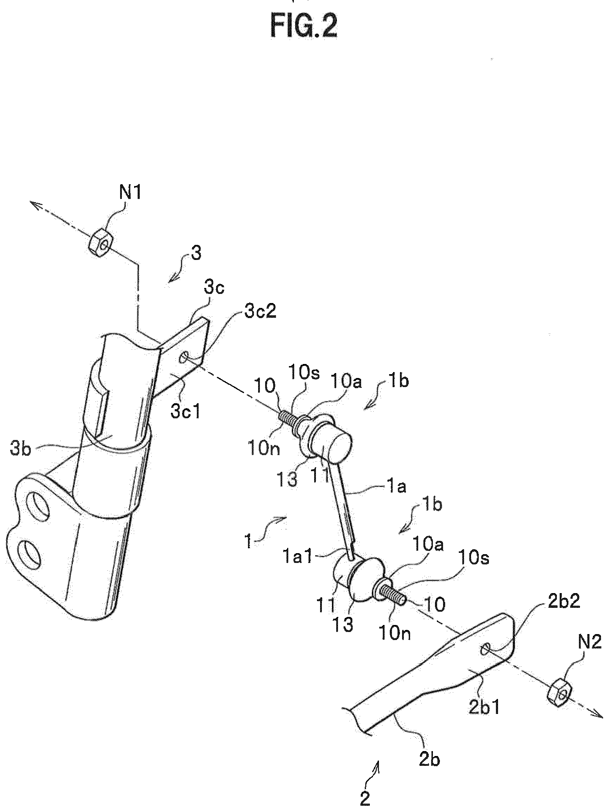

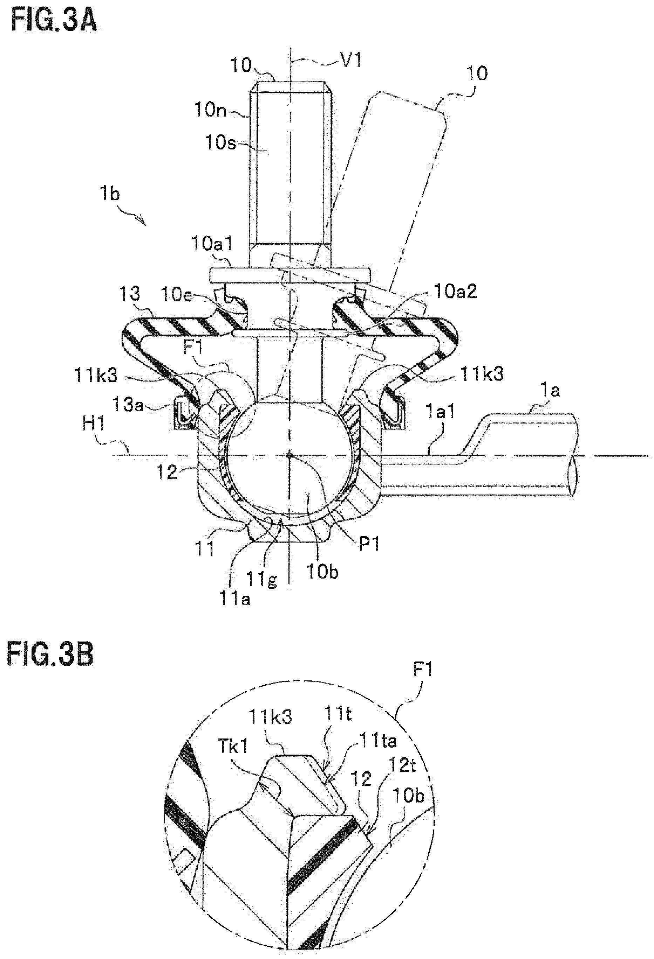

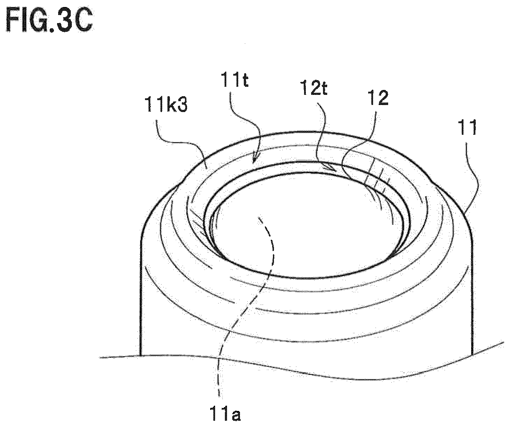

FIG. 1 is a perspective view showing a state in which a stabilizer link including a ball joint according to an embodiment of the present invention couples a damper to a stabilizer. FIG. 2 is an exploded perspective view showing a disassembled state of components in a chain-line frame A in FIG. 1. FIGs. 3A to 3C are vertical cross-sectional views of the ball joint of the stabilizer link.

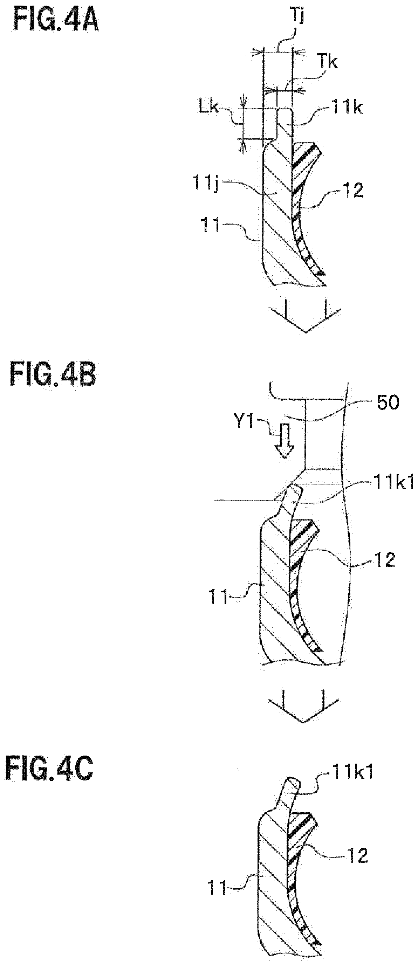

This embodiment is characterized in that a swaged section 11k3 shown in FIG. 3A is formed into a lump (see FIG. 7), which is obtained by partially deforming an opening rim part (a to-be-swaged section) 11k, which is formed thinner than a trunk section 11j of a housing 11 shown in FIG. 4A, into a mountain-shaped cross-section by compressive loading. Note that the opening rim part (the to-be-swaged section) 11k is an opening rim part defined in the claims.

Next, a stabilizer link 1, a stabilizer device 2, and a suspension device 3 shown in FIG. 1 will be described. Wheels W used for travel of a vehicle (not shown) are fitted to a vehicle body (not shown) through the suspension devices 3. Each suspension device 3 includes a coil spring 3a and a damper (a suspension damper) 3b. The damper 3b rotatably supports the wheel W. The damper 3b and the coil spring 3a buffer an impact applied from the wheel W to the vehicle body.

The damper 3b is fitted to the vehicle body (not shown) through the coil spring 3a. The suspension device 3 damps swing and vibration transmitted to the vehicle body by use of a viscous damping force during expansion and contraction of the damper 3b and an elastic force of the coil spring 3a.

The stabilizer device 2 formed from a U-shaped metal rod is connected between the right and left suspension devices 3. The stabilizer device 2 controls rolling of the vehicle by enhancing roll stiffness (stiffness to torsion) of the vehicle body. The stabilizer device 2 includes a torsion bar 2a extending between the wheels W, W, and a pair of arm parts 2b, 2b extending from two ends of the torsion bar 2a in a direction perpendicular to the bar 2a.

The stabilizer device 2 is formed from a rod-like spring member that is appropriately bent in conformity to a shape of the vehicle. The stabilizer device 2 is coupled to each damper 3b that supports the corresponding wheel W through the stabilizer link 1. The way of coupling is the same for both of the wheels W, W opposed to each other.

To be more precise, each stabilizer link 1 includes ball joints 1b on two ends. A front end part of the arm part 2b of the stabilizer device 2 is connected to one of the ball joints 1b and the damper 3b is connected to the other ball joint 1b.

The torsion bar 2a extends between the wheels W, W. When the vehicle makes a turn, for instance, the torsion bar 2a is twisted by displacements of the arm parts 2b that are brought about through the stabilizer links 1 in accordance with a difference in amount of expansion and contraction between the dampers 3b, 3b on the two sides. In this instance, the torsion bar 2a suppresses the rolling of the vehicle by use of a torsional elastic force to recover from the twist.

Next, the stabilizer link 1 will be explained with reference to FIG. 2. The stabilizer link 1 includes a rod-like support bar 1a and the ball joints 1b. The ball joints 1b are disposed at two ends of the support bar 1a.

As shown in FIG. 3A, in the ball joint 1b a ball stud 10 is housed in and swingably and turnably supported by the housing 11. A stud part 10s of the ball stud 10 is provided with a flange part 10a1 and a small flange part 10a2 which spread circularly and are located away from each other. External threads 10n are formed on a portion of the stud part 10s closer to its front end than the flange part 10a1. Note that the stud part 10s constitutes a coupling part defined in the claims.

Between an upper end part of the housing 11 and the flange part 10a1, an upper end circular part of a dust cover 13 is fitted into a circular recess 10e located between the flange part 10a1 and the small flange part 10a2, and a portion of an iron link 13a embedded in a lower end circular part is fitted and fixed to an upper part of the housing 11. To achieve the fit and fixation, a front end part 1a1 of the support bar 1a is squashed in a direction of a perpendicular axis VI.

The ball stud 10 projecting from one of the ball joints 1b of the support bar 1a shown in FIG. 2 is fastened and fixed to a bracket 3c of the damper 3b. Meanwhile, the ball stud 10 projecting from the other ball joint 1b is fastened and fixed to the corresponding arm part 2b of the stabilizer device 2. The bracket 3c fitted to the damper 3b includes a flat surface part 3c1 that extends in an orthogonal direction from the damper 3b. A fitting hole 3c2 is drilled in this flat surface part 3c1. Meanwhile, a front end part 2b1 of the arm part 2b is plastically deformed into a flat shape and a fitting hole 2b2 is drilled therein. The front end part 2b1 of the arm part 2b and the flat surface part 3c1 of the bracket 3c are coupled to each other with the stabilizer link 1.

A description will be given of this coupling. The one stud part 10s of the stabilizer link 1 is inserted into the fitting hole 3c2 in the bracket 3c to a position of the flange part 10a1, then tightened by being brought into threaded engagement with a nut N1. Thus, the ball stud 10 is fixed to the damper 3b. The other stud part 10s is inserted into the fitting hole 2b2 in the arm part 2b to a position of the flange part 10a1, and the external threads 10n on the stud part 10s are tightened by being brought into threaded engagement with a nut N2. Thus, the ball stud 10 is fixed to the arm part 2b of the stabilizer device 2.

As described above, the stabilizer link 1 is fixed to the damper 3b and to the arm part 2b of the stabilizer device 2 through the ball studs 10 provided at the two ends of the support bar 1a. Since the ball studs 10 are swingably and turnably supported by the ball joints 1b on the two sides, the stabilizer link 1 is configured to be movable relative to the damper 3b and the torsion bar 2a (FIG. 1). That is to say, the stabilizer link 1 is movable in response to movements of the suspension device 3 and the stabilizer device 2.

Next, a configuration of the ball joint 1b will be explained in detail with reference to FIGs. 3A to 3C. As shown in FIG. 3A, the ball joint 1b includes the ball stud 10, the housing 11, a ball seat 12, and the above-mentioned dust cover 13, and is configured as described below.

Specifically, the ball stud 10 is swingably and turnably housed in the housing 11 through a ball part 10b and the ball seat 12. The ball stud 10 is assumed to be oriented in a vertical direction. An axis (a perpendicular axis line) VI in the vertical direction passing through the center PI of the ball part 10b and an axis HI (a horizontal axis HI) in a horizontal direction passing through the same center PI and extending orthogonally to the axis V1 are indicated with chain lines. Note that the ball part 10b constitutes a spherical body part defined in the claims while the ball seat 12 constitutes a supporting member defined in the claims.

The ball stud 10 includes the spherical ball part 10b having a shape of a perfect sphere or a shape close to the perfect sphere, and the stud part 10s extending in one direction (the direction of the perpendicular axis VI) from the ball part 10b. An upper part of the ball part 10b is connected to the ball stud 10s while a lower part of the ball part 10b is formed into a flat shape in order to secure a volume of a grease chamber 11g inside the housing 11. The ball part 10b is formed into the perfect sphere within an allowable range. Here, the direction of extension of the stud part 10s in the stabilizer link 1 is appropriately determined based on a positional relation between the damper 3b (see FIG. 2) and the arm part 2b of the stabilizer device 2.

The ball seat 12 is interposed between the housing 11 and the ball part 10b, and has a tubular shape with openings on top and bottom. The ball seat 12 is formed by injection-molding a thermoplastic resin having abrasion resistance and flexibility. Examples of the thermoplastic resin for use therein include engineering plastics and super engineering plastics such as elastic bodies of PA66 (polyamide 66), PA6 (polyamide 6), PPS (polyphenylenesulfide), and POM (polyacetal). Meanwhile, a thickness between an inner surface and an outer surface of the ball seat 12 is either constant or substantially constant. A circular end of the upper opening of the ball seat 12 basically has a flat shape. However, each circular end may have a shape other than the flat shape. Alternatively, the ball seat 12 may have a shape with an opening only on the upper end to allow projection of the stud part 10s.

A metal material that can undergo plastic working, including steel such as carbon steel for machine structure, aluminum, and the like is used for a material of the housing 11. The housing 11 is formed into a cup shape, and its inside is formed into an inner surface of a spherical shape (a spherical inner surface) 11a that can house the ball part 10b through the ball seat 12. However, the spherical inner surface 11a has such a shape that an upper end part of the sphere is cut in a plane parallel to the horizontal axis HI. The ball seat 12 is provided on the spherical inner surface 11a while leaving no space in-between. Moreover, when the ball part 10b is housed in the spherical inner surface 11a through the ball seat 12, the grease chamber 11g is formed below the ball part 10b.

### <Swaged section>

As shown in FIG. 3A, the to-be-swaged section 11k is formed into a swaged section 11k3 having a mountain-shaped cross-section as a consequence of deformation of the opening rim part of the housing 11 by compressive loading. The swaged section 11k3 acts on the ball seat 12 as described below in the case of swaging the ball seat 12. Specifically, the swaged section 11k3 presses the ball seat 12, which is interposed between the spherical inner surface 11a of the housing 11 and an outer peripheral surface of the ball part 10b, downward from above along the perpendicular axis VI, thereby fixing the ball seat 12.

The housing 11 is provided with the swaged section 11k3 as shown in FIG. 3B that represents an enlarged view of a region inside a frame F1 in FIG. 3A. The to-be-swaged section 11k shown in FIG. 4A, which is the opening rim part of the housing 11 formed into an annular plate-like shape, is subjected to steps shown in FIGs.4B to 4G and thus formed into the swaged section 11k3.

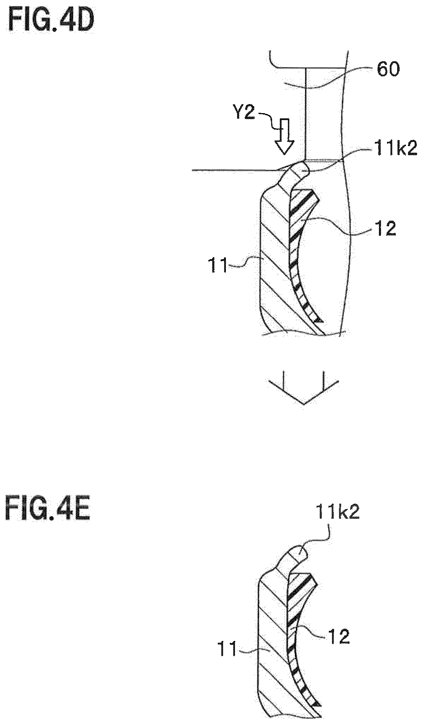

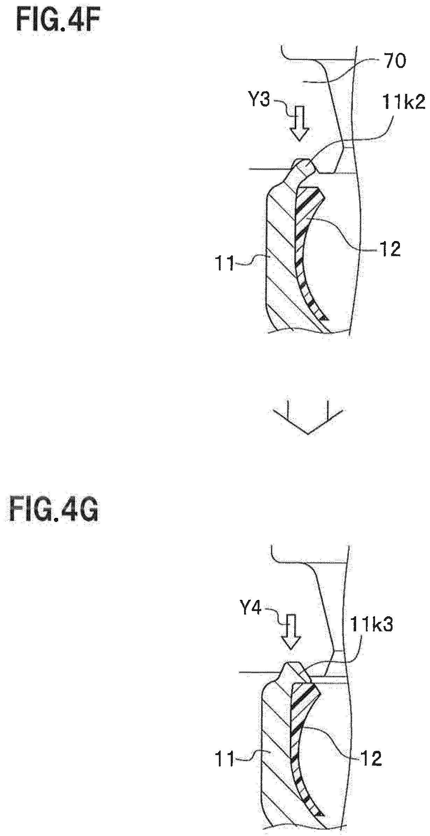

Specifically, a compressive load Y1 is applied downward from above to the to-be-swaged section Ilk with a swage block 50 to be described later, thereby bending the to-be-swaged section Ilk into a part denoted by reference sign 11k1 as shown in FIG. 4B. The thus bent to-be-swaged section 11k1 shown in FIG. 4C is further bent into a part denoted by reference sign 11k2 in FIG. 4D by applying a compressive load Y2 with a swage block 60 to be described later. The thus bent to-be-swaged section 11k2 shown in FIG. 4E is put into a third swage block 70 to be described later as shown in FIG. 4F. Then, a compressive load Y3 is applied. Thereafter, by further applying a compressive load Y4 as shown in FIG. 4G, the swaged section 11k3 is formed as a consequence of the deformation into the mountain-shaped cross-section. Here, the mountain-shaped cross-section is a substantially trapezoidal shape having a flat upper end as observed from the enlarged actual swaged section 11k3 shown in FIG. 7. However, this part may have a different shape like one having an upper side with a triangular peak, for instance.

Here, a description will be given of an advantage in forming the swaged section 11k3 by deforming the to-be-swaged section 11k2 into the mountain-shaped cross-section.

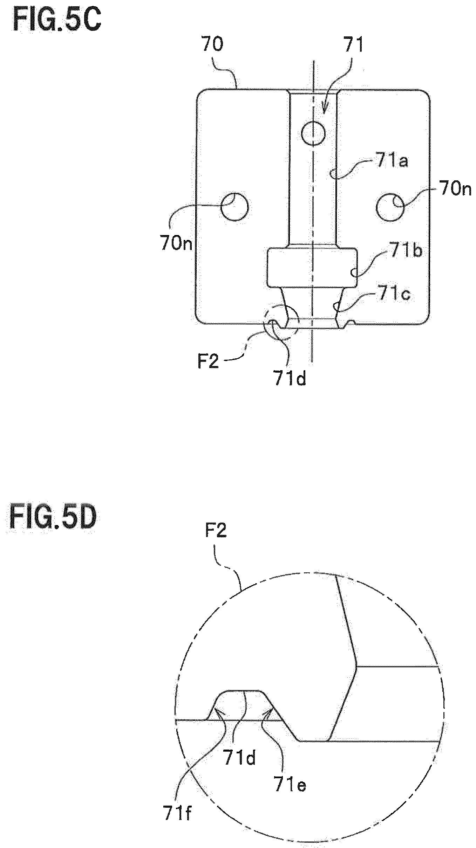

The above-mentioned third swage block (a block) 70 shown in FIGs. 4F and 4G includes a swage recess (a recess) 71d recessed in a shape having a mountain-shaped cross-section as shown in FIG. 5D. The recess 71d includes an inner peripheral inclined surface (an inclined surface) 71e, and an inner peripheral inclined surface 71f opposed to the inner peripheral inclined surface 71e with a predetermined interval in-between.

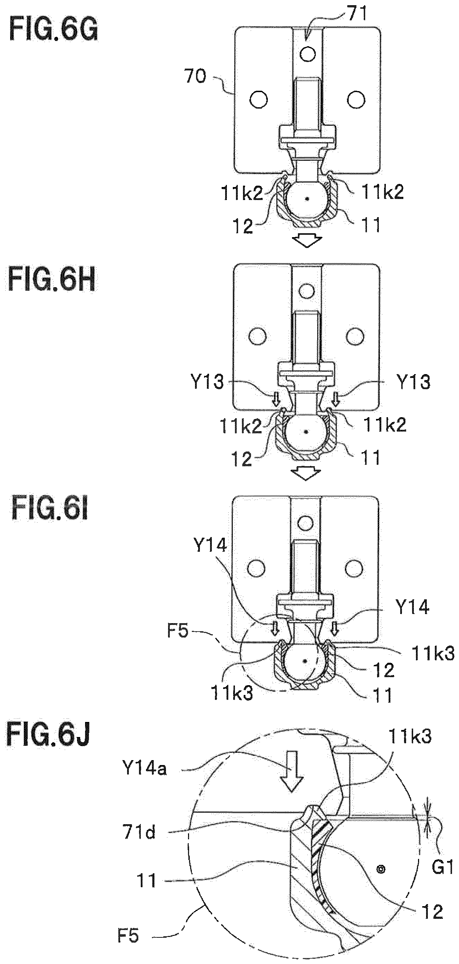

As shown in FIG. 6J, one of the inclined surfaces 71e is located on the ball seat 12 side when swaging the ball seat 12 with the block 70, and the inclined surface 71e is longer than the other inclined surface 71f as shown in FIG. 5D. This long inclined surface 71e serves as a surface for pressing the to-be-swaged section 11k2 in such a direction from its front end side toward the bent part as shown in FIG. 4F. The other inclined surface 71f serves as a surface for constraining the bent part and thus creating a reaction force against the pressing force.

As mentioned above, when the to-be-swaged section 11k2 that is bent at a predetermined angle shown in FIG. 4F is deformed into the swaged section 11k3 having the mountain-shaped cross-section shown in FIG. 4G by using the block 70, the following forces act on the to-be-swaged section 11k2. Specifically, a force that presses downward with an upper surface located between the respective inclined surfaces 71e and 71f of the block 70 and forces that press in mutually opposite directions with the respective inclined surfaces 71e and 71f act on the to-be-swaged section 11k2 shown in FIG. 4F.

For this reason, the bent to-be-swaged section 11k2 is gradually compressed downward from above, and is also compressed substantially in a lateral direction by the force that presses the to-be-swaged section 11k2 from the front end side toward the bent part and the reaction force against this force. As a consequence, part of the metal in the to-be-swaged section 11k2 moves to an outer peripheral side of the bent part whereby the to-be-swaged section 11k2 is deformed into a lump (the swaged section 11k3) having the mountain-shaped cross-section in which the bent part has a thickness equal to or above a predetermined value. The thickness equal to or above the predetermined value refers to such a dimension that at least a thickness Tk1 (FIG. 3B) of the bent part is larger than the thickness Tkm (FIG. 8) of the bent part (a thickness at the part where the metal tension is caused) in the case of bending in the conventional fashion. Moreover, the thickness equal to or above the predetermined value is preferably equal to or above a plate thickness Tk represented by a cross-section of the to-be-swaged section 11k before the bending work as shown in FIG. 4A.

In the swaged section 11k3, the trunk section 11j and a base part of the to-be-swaged section (the opening rim part) 11k2 are bent while creating the thickness equal to or above the predetermined value, whereby this part on the front end side is deformed into the shape having the mountain-shaped cross-section. This shape does not cause the metal tension in such a way as to stretch the outer peripheral side of the bent part toward the front end as observed in the opening rim part of the conventional housing 11 shown in FIG. 8, and the significant residual stress does not remain at this part. That is to say, the swaged section 11k3 of this embodiment has a smaller residual stress than that in the related art and the occurrence of the spring-back is therefore prevented.

Here, when deforming the to-be-swaged section 11k (FIG. 4A) of the housing 11 of this embodiment, such deformation work adopts cold heading. Alternatively, the to-be-swaged section 11k may be heated to such a temperature that does not cause melting and deformation of the ball seat 12.

As described above, the present invention is characterized in that the lump obtained by deforming the to-be-swaged section 11k is provided as the swaged section 11k3, and this swaged section 11k3 is used for swaging the ball seat 12.

The plate thickness (a first plate thickness) Tk indicated with the cross-section of the to-be-swaged section 11k shown in FIG. 4A is formed smaller (by about 1/2 in the drawing) than a plate thickness (a second plate thickness) Tj indicated with a cross-section of the trunk section 11j of the housing 11 below the to-be-swaged section 11k. The plate thickness Tk of the to-be-swaged section 11k has a ratio (a first ratio) in a range from 0.3 to 0.6 relative to the plate thickness Tj of the trunk section of the housing. This ratio is expressed by the following inequality of 0.3 ≤ (Tk/Tj) ≤ 0.6.

Here, as the first ratio becomes higher, the plate thickness Tk becomes larger by increasing closer to the plate thickness Tj. However, when this thickness becomes larger, the to-be-swaged section 11k3 is apt to be deformed harder. Thus, it is more difficult to form the swaged section 11k with the mountain-shaped cross-section. Moreover, if the first ratio exceeds its upper limit (0.6), the trunk section 11j of the housing 11 is more prone to deformation. On the other hand, if the plate thickness Tk is too small, the mountain-shaped cross-section is not obtained by the deformation, and a folded shape is brought about instead. If the first ratio falls below its lower limit (0.3), workability in pressing, cold forging, heading, and the like is significantly damaged. This is why the ratio of the plate thickness Tk of the to-be-swaged section 11k relative to the plate thickness Tj of the trunk section 11j is set within the range of the first ratio.

In the meantime, a length Lk of the to-be-swaged section 11k has a ratio (a second ratio) in a range from 2.0 to 3.5 relative to its plate thickness Tk. This ratio is expressed by the following inequality of 2.0 ≤ (Lk/Tk) ≤ 3.5.

Here, if the second ratio exceeds its upper limit (3.5), or in other words, if the length Lk is more than a predetermined value, the to-be-swaged section 11k becomes too deformable and may be formed into a folded shape and the like. On the other hand, if the second ratio falls below its lower limit (2.0), it is difficult to form the predetermined shape. That is to say, the to-be-swaged section 11k becomes less deformable. This is why the ratio of the length Lk of the to-be-swaged section 11k relative to its plate thickness Tk is set within the range of the second ratio.

### <Swage blocks>

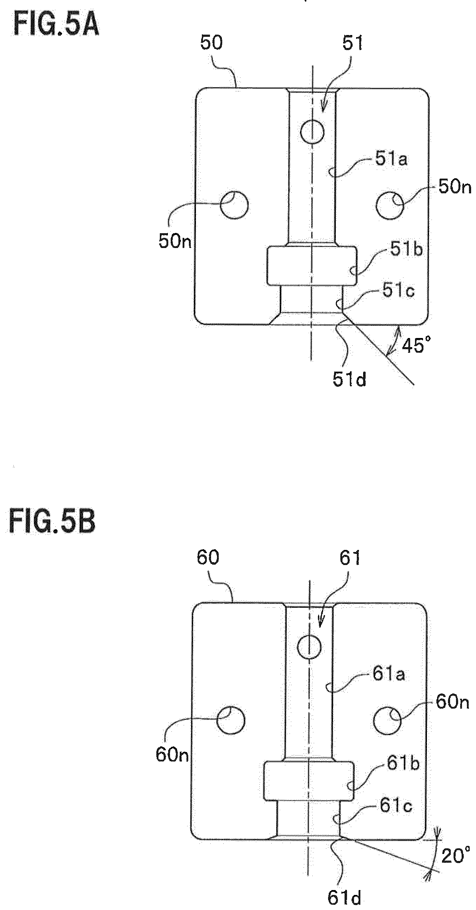

Next, configurations of the swage blocks used to swage the to-be-swaged section 11k of the housing 11 will be explained with reference to FIGs. 5A to 5C. FIG. 5A is a configuration diagram of a first swage block (a first block) 50, FIG. 5B is a configuration diagram of a second swage block (a second block) 60, and FIG. 5C is a configuration diagram of the third swage block (a third block) 70. Each of the swage blocks 50 to 70 has external parts collectively forming a cubic shape (or other shapes such as a cylindrical shape), for example, and is made vertically splittable into halves. Each of FIGs. 5A to 5C represents the configuration diagram in a split state. Note that each of the external parts forming the cubic shape of the swage blocks 50 to 70 constitutes a mold form defined in the claims.

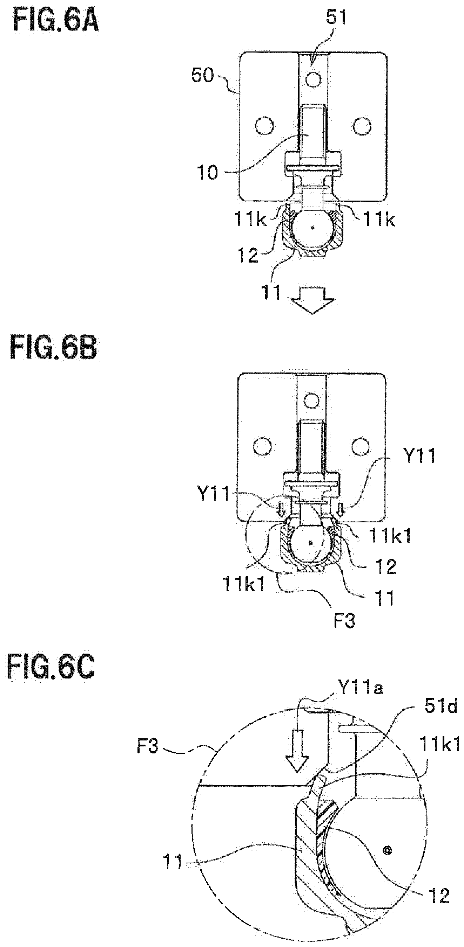

The first block 50 shown in FIG. 5A includes an enclosure 51 vertically penetrating the cube along the center axis thereof, and being configured to enclose the ball stud 10 (see FIG. 6A). The enclosure 51 has a shape which is substantially similar to and greater than an external form of the ball stud 10. The enclosure 51 includes a stud part enclosure 51a that encloses the stud part 10s, and a flange part enclosure 51b that encloses surrounding parts including the flange part 10a1. Moreover, enclosure 51 also includes a ball coupling part enclosure 51c, which encloses a ball coupling part to be coupled to the ball part 10b (see FIG. 3A) and to extend to the small flange part 10a2.

A lower end side of the ball coupling part enclosure 51c is formed into an opening in a circular shape. At this opening rim part, a swage bending surface 51d for coming into contact with and bending the to-be-swaged section 11k is circularly formed into a conical shape. The swage bending surface 51d is formed at an angle of 45° to a horizontal lower surface of the first block 50.

The first block 50 having the above-described configuration is formed by combining the mold forms, which are splittable into two pieces in the vertical direction, into one cube and then integrally fixing the mold forms together by inserting not-illustrated screws into two screw holes 50n, 50n. The screws are loosened when this first block 50 is split into two pieces. However, the mold forms that are splittable into two pieces may have a structure to be integrally fixed to each other in accordance with other methods, such as a combination of a projection and a recess, instead of the integral fixation by inserting the screws into the screw holes 50n, 50n. The first block 50 encloses the ball stud 10 as shown in FIG. 6A by enclosing the ball stud 10 in a split surface recess in the split enclosure 51 and then integrating the other half of the mold form together.

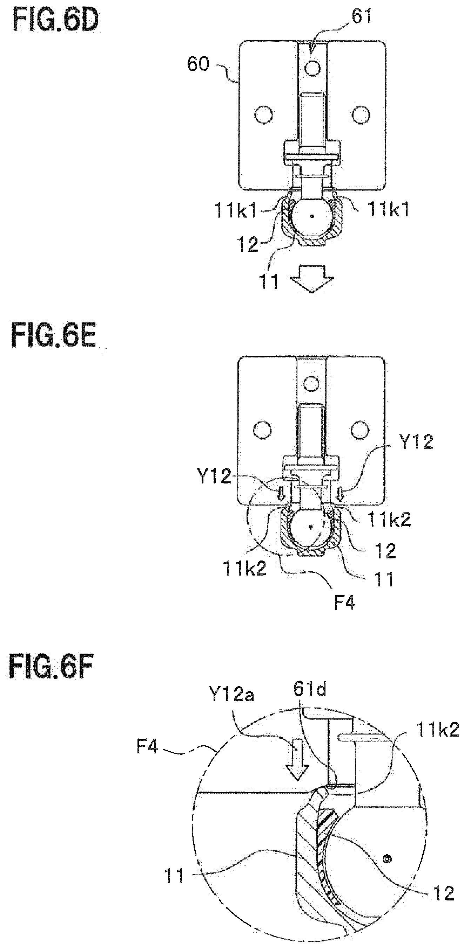

The second block 60 shown in FIG. 5B has the same external shape as that of the first block 50, and includes an enclosure 61 to enclose the ball stud 10 (see FIG. 6D). The enclosure 61 includes a stud part enclosure 61a, a flange part enclosure 61b, and a ball coupling part enclosure 61c. A swage bending surface 61d for coming into contact with and bending the to-be-swaged section 11k is formed at an opening rim part of the ball coupling part enclosure 61c. The swage bending surface 61d is formed at an angle of 20° to a horizontal lower surface of the second block 60. The second block 60 having the above-described configuration is splittable by releasing screws (not shown) to be inserted into screw holes 60n as with the first block 50, and is configured to enclose the ball stud 10 as shown in FIG. 6D.

The third block 70 shown in FIG. 5C has the same external shape as that of the first block 50, and includes an enclosure 71 to enclose the ball stud 10 (see FIG. 6I). The enclosure 71 includes a stud part enclosure 71a, a flange part enclosure 71b, and a ball coupling part enclosure 71c. The swage recess 71d including a concave groove formed concentrically with a circular opening rim of the ball coupling part enclosure 71c is provided at a position on a lower surface of a body located at a predetermined distance away in a horizontal direction from the opening rim. Note that the swage recess 71d constitutes a recess defined in the claims.

A cross-sectional shape of the swage recess 71d is illustrated in FIG. 5D that shows an enlarged part inside a frame F2 in FIG. 5C. The swage recess 71d has the form of the circular concave groove recessed into the mountain-shaped cross-section in order to deform and swage the to-be-swaged section 11k into the above-described mountain-shaped cross-section (see reference sign 11k3 in FIG. 3B). The inner peripheral inclined surface 71e of the swage recess 71d of this shape is formed at such an inclined angle that forms an inclined surface 11t of the swaged section 11k3 having the mountain-shaped cross-section shown in FIG. 3B.

The inclined surface 11t is formed in conformity to an inclination tendency of an inclined surface 12t of the ball seat 12. The inclined surface 12t of the ball seat 12 serves to control a swing angle of the ball stud 10, and is formed into a conical shape which rises from the inside to the outside of the housing 11 at a predetermined angle. By forming the inclined surface 11t of the swaged section 11k3 in conformity to the inclined surface 12t of the ball seat 12 as described above, the swing angle of the ball stud 10 is virtually controlled by the inclined surface 11t of the swaged section 11k3 because the swaged section 11k3 is made of the metal material which is harder than the ball seat 12 made of the resin.

Nonetheless, as indicated with a dashed line 11ta in FIG. 3B, the inclined surface 11t of the swaged section 11k3 may be formed at a position displaced from the inclined surface 11t to the outside of the housing 11 by a predetermined length. In the case of forming the inclined surface 11ta, the inner peripheral inclined surface 71e of the swage recess 71d shown in FIG. 5D is located closer to the inner peripheral inclined surface 71f on the opposite side.

Meanwhile, as shown in FIG. 6J that illustrates an enlarged part in a circular frame F5 in FIG. 6I, the swaged section 11k3 having the mountain-shaped cross-section is enclosed in the swage recess 71d at the time of swaging. The swage recess 71d is formed such that its capacity for enclosing the swaged section 11k3 is set in a range from 40% to 100% relative to a volume of the swaged section 11k3. That is to say, the swage recess 71d has a size between 100% as large as the swaged section 11k3 at a maximum and 40% as large as the swaged section 11k3 at a minimum.

The swage recess 71d has the capacity with which, when the to-be-swaged section 11k having the thickness Tk is deformed into the mountain-shaped cross-section by the compressive deformation, the swage recess 71d deforms substantially the entire volume and capacity of the to-be-swaged section 11k into the swaged section 11k3 having the mountain-shaped cross-section. Meanwhile, the to-be-swaged section 11k to be swaged by the swage recess 71d has the same volume as that of the swaged section 11k3 formed from the lump after the swaging.

Furthermore, as indicated with a clearance G1 in the circular frame F5 of FIG.6J, a lower surface of the third block 70 is formed such that a front end surface of the swage recess 71d is located away by a predetermined distance from an upper end surface of the ball seat 12 when swaging to the maximum. That is to say, the swage recess 71d is formed such that a contact reaction force on the lump (the swaged section 11k3) by the upper surface and the side surfaces in the recess 71d is cancelled at the time of swaging, so as not to deform the ball seat 12.

Meanwhile, the inner surface of the swage recess 71d is formed into a friction resistant surface by being subjected to a treatment such as shot peening in order to increase friction resistance with the to-be-swaged section Ilk at the time of swaging. Here, instead of the friction resistant surface, a non-slip member may be provided to the inner surface of the swage recess 71d.

Moreover, when the swage recess 71d has the mountain-shaped cross-section or a rectangular shape, each upper corner is formed into an R shape. The value R is set in a range from 0.2 to 0.8 in order to increase a filling factor of the swage recess 71d with the swaged section 11k3 so as to form the swaged section 11k3 into a predetermined shape. If the upper corner of the swage recess 71d is angulated, a space may be formed with an upper corner part of the swaged section 11k3. Accordingly, the filling factor may be reduced and the swaged section 11k3 may not be formed into the predetermined shape. In the meantime, the R shape in the range from 0.2 to 0.8 of the upper corner of the swage recess 71d is the shape that enables the to-be-swaged section 11k to be properly deformed.

Meanwhile, each of the side surfaces 71e and 71f of the swage recess 71d shown in FIG. 5D is formed into such a shape that can block (constrain) a to-be-swaged part of the to-be-swaged section 11k from protruding out of the concave groove at the time of swaging. Note that the shape of the swage recess 71d may be any other shape than the shape having the mountain-shaped cross-section as long as that shape is recessed to form a concavity.

The third block 70 having the above-described configuration is also splittable by releasing screws (not shown) to be inserted into screw holes 70n as with the first block 50, and is configured to enclose the ball stud 10 as shown in FIG. 6G.

### <Swaging method>

Next, a method of swaging the to-be-swaged section 11k of the housing 11 by using the above-described swage blocks 50 to 70 will be explained with reference to vertical cross-sectional views shown in FIGs.6A to 6J. Here, as shown in FIGs.3A to 3C, the ball part 10b of the ball stud 10 is inserted into and combined with a spherical space of the ball seat 12, and then the ball part 10b and the ball seat 12 thus combined together are inserted into the inner surface 11a of the housing 11. The ball stud 10 is assumed to be integrally combined with the housing 11 through the ball seat 12 as described above. A swaging process on the integrated housing 11 is conducted in accordance with a first step, a second step, and a third step to be described below.

Note that this swaging process is preferably cold-worked so as to prevent the ball seat 12 made of the resin material inside the housing 11 from melting in case of conducting hot-work. The swaging process can be done sufficiently by the cold-work when the to-be-swaged section 11k is relatively small. In the meantime, no machining oil is coated in principle during the swaging process so as to control inhibition of a frictional force of the to-be-swaged section 11k. Furthermore, an inflected section in the to-be-swaged section 11k to be inflected by the swaging that involves the to-be-swaged section 11k and the trunk section 11j of the housing 11 (see FIG. 4A) is preferably aligned substantially with a changing point of the plate thickness Tk of the to-be-swaged section 11k.

### (First step)

As shown in FIG. 6A, the ball stud 10 is set in the enclosure 51 of the first block 50 while allowing the housing 11 to protrude outward from the lower surface of the first block 50. Here, a lower surface of the housing 11 is assumed to be fixed onto a base, a jig, or the like not illustrated therein. Next, the first block 50 is moved down from above as indicated with arrows Y11 in FIG. 6B. Moreover, a compressive load Y11a is applied to an upper end of the to-be-swaged section 11k by using the swage bending surface 51d of the first block 50 having the angle of 45° as shown in FIG. 6C that illustrates an enlarged part in a circular frame F3 in FIG. 6B. Thus, the upper end of the to-be-swaged section 11k is bent as indicated with reference sign 11k1. Then, the first block 50 is taken away.

### (Second step)

Next, as shown in FIG. 6D, the ball stud 10 with the bent to-be-swaged section 11k1 is set in the enclosure 61 of the second block 60. Then, the second block 60 is moved down from above as indicated with arrows Y12 in FIG. 6E. Moreover, a compressive load Y12a is applied to the upper end of the to-be-swaged section 11k1 by using the swage bending surface 61d of the second block 60 having the angle of 20° as shown in FIG. 6F that illustrates an enlarged part in a circular frame F4 in FIG. 6E. Thus, the upper end of the to-be-swaged section 11k1 is bent further as indicated with reference sign 11k2. Then, the second block 60 is taken away.

### (Third step)

Next, as shown in FIG. 6G, the ball stud 10 with the bent to-be-swaged section 11k2 is set in the enclosure 71 of the third block 70. Then, the third block 70 is moved down from above as indicated with arrows Y13 in FIG. 6H, thereby inserting a front end of the to-be-swaged section 11k2 into the swage recess 71d (see FIG. 4F).

Next, a compressive load Y14 is applied to the upper end of the to-be-swaged section 11k2 by using the swage recess 71d of the third block 70 as indicated with arrows Y14 in FIG. 6I. Then, as shown in the circular frame F5 of FIG. 6J, the to-be-swaged section 11k2 is further deformed by applying thereto a compressive load Y14a with the swage recess 71d. Thus, the to-be-swaged section 11k2 is formed into the swaged section 11k3 having the mountain-shaped cross-section. The ball seat 12 is swaged with the swaged section 11k3.

### <Effects of the embodiment>

The following sections (1) to (9) explain characteristic configurations and effects of the above-described embodiment.
(1) The swaged section 11k3 is provided as the lump having the mountain-shaped cross-section formed by applying the compressive load to at least part of the opening rim part (the to-be-swaged section) 11k formed thinner than the trunk section 11j of the housing 11.
   According to this configuration, the swaged section 11k3 is formed into the lump having the mountain-shaped cross-section. The swaged section 11k3 is formed by deformation of the opening rim part of the housing 11 by the compressive loading, whereby the spring-back is almost eliminated and the swaged section 11k3 and the ball seat 12 are formed as per the design as shown in FIG. 7. Thus, it is possible to achieve the swaging by properly pressing the ball seat 12 with the swaged section 11k3.
(2) The first plate thickness Tk of the opening rim part 11k before being swaged is set to the ratio in the range from 0.3 to 0.6 relative to the second plate thickness Tj of the trunk section 11j of the housing 11.
   The following operation and effect can be obtained from this configuration. The ratio of the first plate thickness Tk to the second plate thickness Tj falling below 0.3 causes a problem of significantly damaging the workability in pressing, cold forging, heading, and the like. On the other hand, deformation becomes more difficult as the ratio increases, and the ratio in excess of 0.6 is apt to cause a problem of increasing the chance of deforming the trunk section 11j of the housing 11. Hence, it is possible to eliminate these problems by setting the ratio in the range from 0.3 to 0.6.
(3) The length Lk of the to-be-swaged section 11k from a base at the trunk section 11j to an end at the opening of the housing is set to the ratio in the range from 2.0 to 3.5 relative to the first plate thickness Tk.
   The following operation and effect can be obtained from this configuration. The ratio of the length Lk of the opening rim part 11k to the first plate thickness Tk falling below 2.0 causes a problem of a difficulty in processing into a predetermined shape. On the other hand, the ratio in excess of 3.5 causes a problem of excessive deformability that may result in the folded shape. Hence, it is possible to eliminate these problems by setting the ratio in the range from 2.0 to 3.5.
(4) The lump serving as the swaged section 11k3 has the mountain-shaped cross-section, and the angle of the inclined surface 11t on the opening side of the mountain-shaped cross-section is configured to be aligned with the angle of the inclined surface 12t that defines the swing angle of the ball stud 10 of the ball seat 12.
   According to this configuration, since the inclined surface 11t on the opening side of the mountain-shaped cross-section of the swaged section 11k3 is aligned with the angle of the inclined surface 12t of the ball seat 12, the swing angle of the ball stud 10 can be virtually controlled by the inclined surface 11t of the swaged section 11k3 as well. Thus, it is possible to control the swing angle of the ball stud 10 more properly.
(5) The swaging method of swaging the ball seat 12 with the swaged section 11k3 of the opening rim of the housing 11 is designed to bend the opening rim part of the housing 11, to apply the pressure from the front end side of bending toward the bent part such that the thickness of the bent part becomes equal to or above a predetermined thickness, and thus to deform at least part of the opening rim part into the lump that serves as the swaged section 11k3.
   According to this method, the opening rim of the housing 11 is deformed into the lump (the swaged section 11k3) having the thickness equal to or above the predetermined thickness. Thus, the spring-back of the bent part is substantially eliminated. On the other hand, if the opening rim part of the housing 11 is simply bent as in the related art, the metal tension is caused in such a way as to stretch the outer peripheral side of the bent part toward the front end, whereby the thickness Tkm (FIG. 8) of the bent part becomes less than the original thickness Tk (FIG. 4A). Thus, the significant residual stress remains and the spring-back is developed.
   However, according to the method of this embodiment, the pressure is applied from the front end side of bending toward the bent part, and at least part of the opening rim part is deformed into the lump (the swaged section 11k3). This reduces the chance of causing the metal tension on the outer peripheral side of the bent part, and the thickness Tk1 (FIG. 3B) of the bent part becomes larger than the thickness Tkm of the bent part in the case of bending as in the related art. Thus, the residual stress is reduced and the spring-back is less likely to occur. In this way, it is possible to form the swaged section 11k3 and the ball seat 12 as per the design, and to conduct the swaging so as to press the ball seat 12 properly with the swaged section 11k3.
(6) The swaging method of swaging the ball seat 12 with the opening rim part 11k is executed in accordance with the following first to third steps.
   In the first step, the bending surface 51d of the first block 50, which is provided with the bending surface 51d having the circular surface inclined by a predetermined first angle, is brought into contact with the front end of the opening rim part 11k of the housing 11, and the opening rim part 11k is bent at the predetermined angle by pressing the bending surface 51d in the direction toward the ball seat 12.
   In the second step, the bending surface 61d of the second block 60, which is provided with the bending surface 61d having the circular surface inclined by a smaller angle than the first angle, is brought into contact with the front end of the opening rim part 11k bent in the first step, and the opening rim part 11k is bent more than the first step by pressing the bending surface 61d in the direction toward the ball seat 12.
   In the third step, the front end of the opening rim part 11k bent in the second step is inserted into the recess 71d of the third block, which is provided with the swaging recess (the recess) 71d formed in one surface in a circularly recessed manner. Moreover, the opening rim part 11k is deformed into the lump that serves as the swaged section 11k3 by pressing the recess 71d in the direction toward the ball seat 12 by applying the compressive load, and the ball seat 12 is swaged with the swaged section 11k3 in the form of the lump.
   According to this method, the opening rim part 11k of the housing 11 is formed into the swaged section 11k3 in the form of the lump by the deformation using the first to third blocks. Thus, the spring-back as observed in the related art is eliminated and the swaged section 11k3 and the ball seat can be formed as per the design.
(7) The swage block 70 for swaging the ball seat 12 with the opening rim part 11k of the housing 11 is configured as described below. Specifically, the swage block 70 includes the enclosure 71a provided in the mold form in the vertically penetrating manner and capable of enclosing the ball stud 10 such that the housing 11 projects outward, and the recess 71d formed by being circularly recessed in one surface of the mold form where the housing 11 projects. Then, the front end of the opening rim part 11k of the housing 11 is inserted into the recess 71d, and the predetermined compressive load is applied to the recess 71d in the direction toward the ball seat 12 so as to deform the opening rim part 11k into the lump. The swaged section 11k3 in the form of the lump is configured to swage the ball seat 12.
   According to this configuration, the front end of the opening rim part 11k of the housing 11 is deformed into the lump and the ball seat 12 is swaged with the swaged section 11k3 being the lump. Thus, the spring-back as observed in the related art is eliminated in the swaged section 11k3, so that the swaged section 11k3 and the ball seat can be formed as per the design.
(8) The inner surface of the recess 71d is recessed into the shape having the mountain-shaped cross-section, and the inclined surface 71e of the mountain-shaped cross-section which is located on the opening side of the mold form is configured to be aligned with the inclined surface 12t of the ball seat 12 inclined at the swing angle of the ball stud 10.
   According to this configuration, when the swaged section 11k3 is formed with the swage block 70, the inclined surface on the opening side of the mountain-shaped cross-section of the swaged section 11k3 is formed into the shape aligned with the swing angle of the ball stud 10. Since the inclined surface of the swaged section 11k3 can also control the swing angle of ball stud 10, it is possible to control the swing angle of the ball stud 10 more properly.
(9) The recess 71d is configured to have the capacity in the range from 40% to 100% relative to the volume of the lump when the lump is formed by deforming the opening rim part 11k of the housing 11 with the recess 71d.
   According to this configuration, when the swaged section 11k3 is formed with the swage block, it is possible to form the swaged section 11k3 into the mountain-shaped cross-section.
(10) The inner surface of the recess 71d is formed into the friction resistant surface represented by any of multiple wave shapes and an irregular shape to cause friction with the front end of the opening rim part 11k of the housing 11.

According to this configuration, when the front end of the opening rim part 11k of the housing 11 is inserted into the recess 71d and is pressed with the compressive load, the front end is kept from slipping thanks to the friction with the inner surface of the recess 71d. Thus, it is possible to deform the opening rim part 11k properly.

In addition, specific configurations of the present invention can be modified as appropriate within the scope not departing from the gist of the invention.

The ball joint including the swaged section of the present invention is applicable to a joint part of a robot arm of an industrial robot or a humanoid robot, and to a device such as a loading shovel and a mobile crane provided with an arm to be turned by using a joint part.

### Reference Signs List

- 1: Stabilizer link
- 1b: Ball joint
- 2: Stabilizer device (Structure)
- 3: Suspension device (Structure)
- 10: Ball stud
- 10b: Ball part (Spherical body part)
- 10s: Stud part
- 11: Housing
- 11a: Spherical inner surface
- 11k: To-be-swaged section (Opening rim part of housing)
- 11k3: Swaged section (Lump)
- 12: Ball seat (Supporting member)
- 12k: Spherical space
- 50: First swage block (First block)
- 60: Second swage block (Second block)
- 70: Third swage block (Third block)
- 71d: Swage recess (Recess)

## Claims

1. A ball joint comprising:
a ball stud formed by integrally joining a spherical body part to an end part of a coupling part;
a housing made of a metal material, provided with a space having an opening on one side, and configured to swingably and turnably support the spherical body part of the ball stud; and
a supporting member interposed between the housing the spherical body part, the supporting member being swaged by a swaged section at an opening rim of the housing, wherein
the swaged section is a lump having a mountain-shaped cross-section and formed by at least part of an opening rim part formed thinner than a trunk section of the housing.

2. The ball joint according to claim 1, wherein a first plate thickness representing a thickness of the opening rim part of the housing to be swaged is set to a ratio in a range from 0.3 to 0.6 relative to a second plate thickness representing a thickness of the trunk section of the housing.

3. The ball joint according to claim 2, wherein a length of the opening rim part from a base at the trunk section to an end at the opening of the housing is set to a ratio in a range from 2.0 to 3.5 relative to the first plate thickness.

4. The ball joint according to claim 1, wherein an angle of an inclined surface on the opening side of the mountain-shaped cross-section of the lump is aligned with an angle of the supporting member corresponding to a swing angle of the ball stud.

5. A swaging method applicable to a ball joint including
a ball stud formed by integrally joining a spherical body part to an end part of a coupling part,
a housing made of a metal material, provided with a space having an opening on one side, and configured to swingably and turnably support the spherical body part of the ball stud, and
a supporting member interposed between the housing the spherical body part,
the swaging method being designed to swage the supporting member by a swaged section at an opening rim of the housing,
the swaging method comprising:
bending an opening rim part of the housing;
applying a pressure from a front end side of bending toward the bent part; and
deforming at least part of the opening rim part into a lump serving as the swaged section.

6. A swaging method applicable to a ball joint including
a ball stud formed by integrally joining a spherical body part to an end part of a coupling part,
a housing made of a metal material, provided with a space having an opening on one side, and configured to swingably and turnably support the spherical body part of the ball stud, and
a supporting member interposed between the housing the spherical body part, the swaging method being designed to swage the supporting member by a swaged section at an opening rim of the housing,
the swaging method comprising executing:
a first step of bringing a bending surface of a first block, which is provided with the bending surface having a circular surface inclined by a predetermined first angle, into contact with the opening rim of the housing, and bending an opening rim part of the housing at a predetermined angle by pressing the bending surface in a direction toward the supporting member;
a second step of bringing a bending surface of a second block, which is provided with the bending surface having a circular surface inclined by a smaller angle than the first angle, into contact with a front end of the opening rim part bent in the first step, and bending the opening rim part more than the first step by pressing the bending surface in the direction toward the supporting member; and
a third step of inserting the front end of the opening rim part bent in the second step into a recess of a third block, which is provided with the recess formed in one surface in a circularly recessed manner, and deforming the opening rim part bent in the second step into a lump serving as the swaged section by pressing the recess in the direction toward the supporting member, and swaging the supporting member with the lump.

7. A swage block applicable to a ball joint including
a ball stud formed by integrally joining a spherical body part to an end part of a coupling part,
a housing made of a metal material, provided with a space having an opening on one side, and configured to swingably and turnably support the spherical body part of the ball stud, and
a supporting member interposed between the housing the spherical body part,
the swage block being designed to allow a swaged section at an opening rim of the housing to swage the supporting member, the swage block comprising:
an enclosure including a through-hole being provided in a mold form in a vertically penetrating manner, and being capable of enclosing the ball joint such that the coupling part is enclosed in the through-hole while the housing projects outward; and
a recess formed by being circularly recessed in an end surface of an opening of the mold form where the housing projects, wherein
the opening rim of the housing is inserted into the recess,
the recess is pressed in a direction toward the supporting member to deform an opening rim part of the housing into a lump, and
the supporting member is swaged with the lump.

8. The swage block according to claim 7, wherein
an inner surface of the recess is recessed into a shape having a mountain-shaped cross-section, and
an inclined surface of the mountain-shaped cross-section, the inclined surface located on the opening side of the mold form is aligned with an angle corresponding to a swing angle of the ball stud.

9. The swage block according to claim 8, wherein the recess has a capacity in a range from 40% to 100% relative to a volume of the lump.

10. The swage block according to claim 7, wherein an inner surface of the recess is formed into a friction resistant surface represented by any of a plurality of wave shapes and an irregular shape to cause friction resistance to the opening rim of the housing.
